# EUROPÄISCHE PATENTSCHRIFT

(11) **EP 3 036 968 B1**
(45) Veröffentlichungstag und Bekanntmachung des Hinweises auf die Patenterteilung: **03.03.2021**
(21) Anmeldenummer: 14750726.3
(22) Anmeldetag: 12.08.2014
(51) Int. Cl.: H05B 7/14

(54) **VERBESSERTE ELEKTRODEN/NIPPEL-VERBINDUNG**
IMPROVED ELECTRODE/NIPPLE CONNECTION
CONNEXION AMÉLIORÉE ENTRE DES ÉLECTRODES ET UN RACCORD FILETÉ

(30) Priorität: 20.08.2013 DE 102013216452
(43) Veröffentlichungstag der Anmeldung: 29.06.2016
(73) Patentinhaber: SHOWA DENKO CARBON Germany GmbH, 86405 Meitingen (DE)
(72) Erfinder: WERNER, Franz-Xaver, 86405 Meitingen (DE); CHRIST, Martin, 86405 Meitingen (DE); FISCHER, Stefan, 86405 Meitingen (DE); RICHTER, Norbert, 86405 Meitingen (DE)
(86) Internationale Anmeldenummer: PCT/EP2014/067273
(87) Internationale Veröffentlichungsnummer: WO 2015/024822

(56) Entgegenhaltungen:
- CA-A- 730 229
- DE-B- 1 290 642
- ES-A1- 224 374
- US-A- 2 735 705
- US-A- 2 836 806
- US-A- 4 725 161
- US-A1- 2005 271 114

## Beschreibung

Die vorliegende Erfindung betrifft ein Verfahren zur Herstellung einer sicheren Verbindung zwischen Nippel und Elektrode.

Neben der Herstellung von Stahl über die Hochofenroute vermittels Eisenerz wird Stahl schon seit längerer Zeit auch aus Stahlschrott, Eisenschwamm und Roheisen in Lichtbogenöfen erzeugt. Hierbei kommen regelmäßig Graphitelektroden zum Einsatz, unabhängig davon, ob es sich um ein Wechselstrom- oder Gleichstromverfahren handelt.

Die in diesen Verfahren zum Einsatz kommenden Elektroden sind hohen thermischen und mechanischen Beanspruchungen ausgesetzt. Der von dem Schmelzgut zu den Elektroden verlaufende Lichtbogen erzeugt Temperaturen größer 3500°C. Im Laufe des Schmelzvorgangs wird das Elektrodenmaterial kontinuierlich abgebaut, womit eine fortwährende Verkürzung der Elektroden einhergeht. Um gleichwohl den für ein zuverlässiges Aufschmelzen erforderlichen konstanten Abstand zwischen Schmelzgut und Elektrode sicherzustellen, wird diese kontrolliert in den Schmelzofen nachgeführt. Elektroden, wie zum Beispiel Graphitelektroden, sind nicht in beliebiger Länge verfügbar. Aus Praktikabilitätsgründen ist man daher dazu übergegangen, einen Elektrodenstrang zu bilden aus miteinander verschraubten Elektrodensegmenten. Zur Verschraubung wird hierbei auf zum Beispiel doppelkonische Nippelgewinde, wie in der US 2002/0142164 offenbart, zurückgegriffen. Sobald die Länge einer Elektrode nicht mehr ausreicht, kann ein neues Elektrodensegment in das (nahezu) verbrauchte Elektrodensegment eingeschraubt werden, wodurch der kontinuierliche Aufschmelzprozess beibehalten wird. Aufgrund der starken thermischen und mechanischen Belastungen, die die sich stetig verkürzende Elektrode ausgesetzt ist, hat es nicht an Versuchen gefehlt, die Schraubverbindung zwischen Nippel und Elektrode gegen Lösen zu sichern, beispielsweise durch Verwendung einer Kleber- bzw. Kitmasse.

So wird in der DE 42 40 473 hierfür eine unter Temperatureinwirkung mindestens zum Teil schmelz- und verkokbare Masse vorgeschlagen, die eine unter Temperatureinwirkung schmelz- und verkokbare Substanz enthält, bestehend aus einem komplexen Gemisch wärmepolymerisierter niedermolekularer Kohlenwasserstoffe und monozyklischer aromatischer Kohlenwasserstoffe, die Alkylseitenketten und Hydroxylgruppen enthalten können. Diese Masse hat darüber hinaus einen Erweichungspunkt (DIN 52052) im Bereich von 50 bis 120°C aufzuweisen, einen Gehalt an in Toluol Unlöslichen von maximal 2,5%, einen Gehalt an Benzo(a)pyren kleiner 50 ppm und eine Viskosität (bei 160°C) im Bereich von 300 bis 8000 mPas. Bei Verwendung einer solchen Masse sollen sich Schraubverbindungen zwischen Elektroden aus Kohlenstoff oder Graphit und einem gewindetragenden Nippel aus Kohlenstoff oder Graphit besonders sicher gestalten lassen, wenn zudem ein Fortsatz stirnseitig in eine komplementäre Ausnehmung der Gewindeschachtel einer zu verbindenden Elektrode eingreift. Die vorangehend vorgeschlagenen Vorkehrungen sind material- wie auch verfahrenstechnisch aufwendig und häufig nicht in Einklang zu bringen mit den Anforderungen an eine ungestörte kontinuierliche Prozessführung.

Aus der US 2005/0271114 A1 ist bekannt, eine klebemittelhaltige Scheibe stirnseitig zwischen dem eingeschraubten Nippel und dem Boden der Gewindeschachtel der Elektrode vorzusehen. Beim Einschrauben bzw. Erwärmen gelangt das Klebermaterial in senkrecht zum Mittelgewinde verlaufende Nuten, was zu einer Verteilung der Klebemasse beitragen soll. Allerdings wird in der US 2005/0271114 A1 ebenfalls sogleich vorgeschlagen, zusätzlich Bohrungen quer zur Längsachse des Nippels vorzusehen und diese mit einer Klebemasse zu befüllen. Diese Bohrungen sollen in die genannten Nuten einmünden. Erneut soll bei Erwärmung das Klebematerial aus diesen Bohrungen hinaustreten und sich entlang der Nuten verteilen. Die technische Lehre der US 2005/0271114 A1 sieht folglich vor, im eingeschraubten bzw. nahezu eingeschraubten Zustand Klebematerial freizusetzen, das zu einer besseren Anbindung und damit Sicherung von Nippel und Elektrode führen soll.

Eine Verfeinerung der in der US 2005/0271114 A1 vorgeschlagenen Vorgehensweise ist in der EP 1 565 040 A1 zu finden. Die Nuten haben hierbei vorzugsweise schräg zum Nippelgewinde, bei dem es sich um einen doppelkonischen Nippel handelt, zu verlaufen und haben zudem über eine Erstreckung zu verfügen, die derart begrenzt ist, dass mindestens ein vollständiger Gewindeumlauf verbleibt. Auch bei dieser Gestaltung der im eingeschraubten bzw. verschraubten Zustand Klebemittel aufnehmenden Nut bedarf es zusätzlicher, mit Klebemasse gefüllter Bohrungen, die sich quer zur Längsachse des Nippels erstrecken und die in die Nut münden. Bei Erwärmung soll diese Klebemasse in die Nut fließen, um so zu einer festeren Bindung zwischen Elektrode und Nippel beizutragen.

Gemäß der DE 693 14 385 kann auf die Anbringung von Nuten verzichtet werden, wenn man mindestens vier senkrecht zur Längsachse des Nippels verlaufende Bohrungen vorsieht, die abwechselnd mit einem Pechzement, dem ein Schaummittel beigefügt ist, und mit einem synthetischen Zement aus wärmehärtbarem Harz gefüllt sind. Dieser synthetische Zement hat in Gegenwart eines Katalysators bei einer Temperatur oberhalb 60°C zu schmelzen, um eine Flüssigphase mit einer Viskosität von weniger als 2500 mPa.s zwischen 90°C und 120°C zu bilden und bei einer Temperatur von größer oder gleich 120°C zu polymerisieren.

Auch die US 3,717,911 macht von Bohrungen in dem Nippelgewinde Gebrauch. Diese Bohrung bzw. Bohrungen erstrecken sich allerdings im Wesentlichen parallel zur Längsachse des Nippels. Über diese Bohrungen soll Klebemasse zu der Stirnfläche des Nippels im eingeschraubten Zustand gelangen und sich zwischen der Stirnfläche und dem Boden des Schachtelgewindes verteilen, um so zu einer festen Verbindung beizutragen.

Gemäß der DE 1 071 249 kann eine selbsthärtende Klebemasse zur Sicherung der Schraubenverbindung bei Kohlenstoff- oder Graphitelektroden verpackt in einer Kunststoffhülle zwischen dem Boden der Gewindeschachtel und der Stirnfläche des Nippelgewindes eingelegt werden. Bei Beendigung des Einschraubens des Gewindenippels wird die mit Klebemasse gefüllte Kunststoffhülle zum Platzen gebracht, so dass die Klebemasse in an sich bekannter Weise in die vorhandenen Vertiefungen und Nuten von Nippel- und Schachtelgewinde hineingepresst wird.

Ohne eine Kunststoffhülle kommt hingegen die technische Lehre der US 2002/0142164 aus, indem expandierbare Massen aus interkalierten Graphitflocken und Pech in stirnseitig in einem doppelkonischen Nippelgewinde vorgesehene Vertiefungen passgenau eingelegt werden. Bei dem zu verwendenden Material hat es sich um ein solches zu handeln, das unter Temperatureinwirkung expandiert. Auf diese Weise soll eine Klebemittelverbindung zwischen dem Nippelgewinde und dem Schachtelboden bewerkstelligt werden.

Die DE 1 186 959 schlägt ein Verfahren zum Verbinden zweier kohlenstoffhaltiger Elektroden durch einen doppelkonischen Gewindenippel vor, bei dem auf jeder Seite des Nippels ein Beutel mit einer Klebemasse zwischen den jeweiligen Nippelstirnflächen und Schachtelböden der einzelnen Elektroden einzulegen ist. Hierbei haben beide Klebebeutel in der Art bemessen zu sein, dass durch die Distanzwirkung der beiden Klebebeutel eine symmetrische Lage des Nippels zu beiden Elektrodenschachteln gewährleistet werden kann. Erst dann sind die Elektroden fest mit dem doppelkonischen Nippel zu verschrauben, wobei die Hüllen beider Beutel gleichzeitig zerstört werden und sich die einzelnen Klebemassen zwischen Nippel und Elektrode verteilen. Auf diese Weise soll eine symmetrische Verschraubung unter gleichzeitiger Verkittung von Nippel und Elektroden gelingen. Es soll so vermieden werden, dass die Elektrodenschachteln während des Betriebs reißen bzw. gesprengt werden. Darüber hinaus schlägt diese Druckschrift vor, Längsrillen bzw. Nuten in dem Nippelgewinde vorzusehen, die im Wesentlichen senkrecht zum Nippelgewinde verlaufen und die über eine Tiefe verfügen, die der Gewindetiefe des Nippelgewindes entsprechen.

Ein ähnliches Verfahren findet man in der DE 1 290 642 offenbart. Bei diesem Verfahren wird besonderer Wert auf die Verwendung eines elastischen Hüllenmaterials für den die Klebemasse enthaltenden Beutel gelegt. Beispielhaft wird eine Polyethylenfolie genannt.

Alternativ ist gemäß DE 103 12 170 versucht worden, die Anbindung von Nippelgewinde und Schachtelgewinde dadurch zu verbessern, dass man Kohlenstofffasern verwendet, deren Oberfläche oxidativ aktiviert worden ist und die zusätzlich eine carbonisierte Beschichtung aufweisen. Hierbei hat die carbonisierte Beschichtung das Carbonisierungsprodukt eines Beschichtungsmittels zu sein, dass ausgewählt ist aus Wachs, Pech, Naturharzen sowie thermoplastischen und duroplastischen Polymeren.

Ferner hat man alternativ versucht, zu einer verbesserten Verbindung zwischen Nippelgewinde und Schachtelgewinde zu gelangen, indem man besonderes Augenmerk auf die Geometrie der Gewindeformen gelegt hat. So wird in der DE 60 2004 006 939 vorgeschlagen, dass das Innengewinde einer Elektrodenschachtel und das Außengewinde eines Nippels Gewindegänge mit im Wesentlichen einheitlicher Steigung, einem Flankengrund und einer Flankenspitze sowie individuelle Gewindegänge mit im Wesentlichen einem V-Profil aufzuweisen haben. Hierbei haben darüber hinaus wenigstens das Außengewinde oder wenigstens das Innengewinde mit einer Keilrampe am Flankengrund ausgebildet zu sein, wobei bei Verschraubung eines solchen Außenteils mit einem solchen Innenteil die Flankenspitzen eines dieser Teile an die Keilrampe des anderen Teils stoßen und wobei das Innengewinde und das Außengewinde konisch ausgeführt sind und dabei die Flanken der individuellen Gewindegänge der Schraubenverbindung nicht mit Last beaufschlagt sind.

In US 2 735 705 ist ein Kittstift für Elektrodenverbindungsstücke beschrieben, der mit einem wärmeisolierenden Material umgeben sein kann. Ein solcher Kittstift aus Pech könnte heute aus gesundheitlichen Gründen nicht mehr eingesetzt werden.
In US 2005/271114 A1 ist ein Elektrodenverbindungsstück beschrieben, wobei Pech zwischen Schachtelboden und Stirnbereich des Verbindungsstücks eingebracht wird. Eine solche Vorgehensweise ist mit Kleber nicht möglich, da es in einem Stahlwerk zu sehr staubt.
In US 4 725 161 A und ES 224 374 A Elektrodenverbindungsstück mit einem Behältnis beschrieben, das auch eine Pechverbindung enthält, der ein Treibmittel zugesetzt werden kann. Ferner ist in

Die aus dem Stand der Technik bekannten Verfahren sowie Elektroden/Nippel-Verbindungen lassen noch stets Wünsche offen. Der vorliegenden Erfindung lag daher die Aufgabe zugrunde, die Elektroden/Nippel-Verbindung bei kohlenstoffhaltigen Elektroden noch fester bzw. zuverlässiger zu machen. Ferner lag der Erfindung die Aufgabe zugrunde, die Elektroden/Nippel-Verbindung derart auszugestalten, dass eine Verbindung unter gattungsgemäßen Nutzungsbedingungen auch dann noch bestehen bleibt, wenn die Elektrodenschachtel der Elektrode angerissen, gerissen oder gesprengt ist, vorzugsweise auch dann noch, wenn die Elektrode nahezu vollständig verbraucht ist bzw. nur noch als Elektrodenstumpf vorliegt. Demgemäß lag der Erfindung insbesondere die Aufgabe zugrunde, die Bildung sogenannter Reststückabfälle, d.h. von sich mangels Halt bzw. Haftung lösenden Elektroden- und/oder Nippelrückständen bzw. Elektroden- und/oder Nippelrestrückständen zu eliminieren bzw. jedenfalls zu reduzieren. Außerdem lag der Erfindung die Aufgabe zugrunde, ein Mittel zur Verfügung zu stellen, die das sichere und feste Verbinden von Elektrode bzw. Elektrodenschachtel und Nippel auf einfache und unkomplizierte Weise gestatten, insbesondere ohne dass etablierte Prozessabläufe signifikant geändert werden müssen. Schließlich lag der Erfindung die Aufgabe zugrunde, ein einfaches und zuverlässiges Verfahren zur Herstellung einer sehr festen Elektroden/Nippel-Verbindung, unter Verwendung eines mit Kleber gefüllten Beutels, der in einer Nut im Bereich eines Gewindes angebracht ist, verfügbar zu machen.

Die der Erfindung zugrunde liegende Aufgabe wird durch das Verfahren nach Anspruch 1 gelöst.

Laminierte Folien im Sinne der vorliegenden Erfindung sollen flächig miteinander verbundene Folien umfassen. Beispielsweise können zwei oder mehr Folien bzw. Folienlagen mittels Kaschierens miteinander verbunden werden. Laminierte Folien können aber auch durch Coextrusionsverfahren erhalten werden. Eine Metallfolie bzw. eine Metallfolienlage kann z.B. als separate Folie mit einer Kunststofffolie verklebt bzw. kaschiert werden. Metallfolien im Sinne der Erfindung lassen sich indes auch mittels Aufdampfens auf eine Kunststofffolie erhalten.

Der flüssige oder pastöse thermisch und/oder chemisch härtende bzw. härtbare Kleber bzw. die Klebermischung zur Sicherung einer Elektroden/Nippel-Verbindung enthält oder besteht in einer geeigneten Ausführungsform a) mindestens eine Harzbasis und/oder b) mindestens eine Pechbasis sowie c) mindestens einen Füllstoff, insbesondere enthaltend Graphit- und/oder Rußpartikel, vorzugsweise mit einer durchschnittlichen Partikelgröße kleiner oder gleich 0,5 mm, sowie d) gegebenenfalls mindestens einen Härter, insbesondere Latenthärter. Bevorzugt enthält der Kleber bzw. die Klebermischung mindestens eine Harzbasis und/oder mindestens eine Pechbasis und mindestens einen Füllstoff, enthaltend Graphit- und/oder Rußpartikel mit einer durchschnittlichen Partikelgröße kleiner oder gleich 0,5 mm. Dabei kann zum Beispiel vorgesehen sein, dass die Harzbasis mindestens eine Phenolharzbasis, mindestens eine Epoxidharzbasis, mindestens eine Cyanatesterharzbasis und/oder mindestens eine Furfurylalkoholharzbasis darstellt oder umfasst. Als besonders vorteilhaft haben sich hat sich der Einsatz von Phenolharzen erwiesen, beispielsweise solche Phenolharze die vermittelst eines Hexamin-Katalysators erhalten worden sind. Geeigneter Weise wird häufig auch auf Mischungen aus Phenol und Pech zurückgegriffen. Unter den geeigneten Füllstoffen kann zum Beispiel ausgewählt werden unter Graphitstaub, Graphitpulver, gemahlener Graphitfolie und Ruß. Geeignetes Graphit umfasst Naturgraphit, expandierten Graphit, synthetischen Graphit oder beliebige Mischungen hiervon. Die durchschnittliche Partikelgröße der Grafit -bzw. Rußpartikel liegt vorzugsweise nicht oberhalb von ca. 0,4 mm und besonders bevorzugt nicht oberhalb von ca. 0,3 mm und kann sich zum Beispiel auch im Bereich von 0,2 bis 0,4 mm bewegen, wobei selbstverständlich auch auf durchschnittliche Partikelgröße im Mikrometerbereich zurückgegriffen werden kann, z.B. im Bereich von 30 µm bis 90 µm. Vorzugsweise stellen die Graphitpartikel expandiertes Graphitpulver dar oder umfassen dieses, insbesondere mit einem Kohlenstoffgehalt größer oder gleich 85 Gewichtsprozent, bestimmt nach DIN 54903 (800°C, 20 h) und/oder insbesondere mit einer Partikelgröße D₅₀ im Bereich von 1 µm bis 100 µm, bestimmt mittels Laserstreuung (laser diffraction) (gemäß ISO 13320). Der D50 gibt dabei die mittlere Partikelgröße an, d.h. D50 bedeutet, dass 50% der Partikel kleiner sind als der angegebene Wert. Besonders bevorzugt weist das Graphitpulver einen Kohlenstoffgehalt größerer oder gleich 90 Gewichtsprozent und bevorzugt größer oder gleich 95 Gewichtsprozent auf und/oder eine Partikelgröße D₅₀ im Bereich von 1 µm bis 50 µm und bevorzugt im Bereich von 2 µm bis 15 µm.

Geeignete Kleber bzw. Klebermischungen können ferner über mindestens einen Härter und/oder mindestens ein Treibmittel, insbesondere jeweils umfassend mindestens eine Carbonsäure, verfügen. Unter den geeigneten Härtern sei zum Beispiel auf Chloranil verwiesen Als besonders geeignet haben sich als Härter auch so genannte Latenthärterverbindungen erwiesen. Exemplarisch sei als geeigneter Latenthärter Hexamethylentetramin (Urotropin) genannt.

Demgemäß sind unter den Treibmitteln solche besonders bevorzugt, die als Zersetzungsprodukte Härtungskatalysatoren liefern. Beispielhaft seien in diesem Zusammenhang Benzolsulfonsäurehydrazid und die Derivate des Benzolsulfonsäurehydrazids, p-Toluolsulfonsäure, Ammoniumphosphat und Phosphorsäure genannt.

Die geeigneten Kleber bzw. Klebermischungen härten zum Beispiel bei Temperaturen im Bereich von Raumtemperatur (20°C) bis etwa 250°C, vorzugsweise im Bereich von z.B. 50°C bis 200°C oder 80°C bis zu 180°C, besonders bevorzugt im Bereich von 100°C bis 150°C bzw. im Bereich von 120°C bis 140°C aus, in einer besonders pragmatischen Ausgestaltung in nicht mehr als 10 Minuten, besonders bevorzugt in nicht mehr als fünf Minuten.

Des Weiteren kann vorgesehen sein, dass geeignete Kleber bzw. Klebermischungen nicht als einheitliche Produktmischung vorliegen, sondern in Form eines Klebermischung-Kits, in dem der Härter eine separate Komponente darstellt. Durch Zurverfügungstellung eines solchen Kits kann die Lagerfähigkeit erhöht werden. Die aushärtbare Klebermischung wird erst durch Zusammengeben der Komponenten des Kits vor dem eigentlichen Gebrauch hergestellt.

Beispielhaft sei als geeignete Klebermischung auf die in der CN 2010/1586493 offenbarten Zusammensetzungen verwiesen. Neben einem thermisch härtbaren Harz enthalten diese Zusammensetzungen expandierten Graphit, nicht expandiertes Graphitpulver, einen Härter und Petroleumkohlenstaub sowie gegebenenfalls auch Pech.

In einer besonders zweckmäßigen Ausgestaltung kann vorgesehen sein, dass die Laminatfolie mindestens eine Metallfolie, insbesondere Aluminiumfolie, und mindestens eine Kunststofffolie, insbesondere eine Polyolefin- und/oder Polyesterfolie, enthält oder hieraus besteht.

Des weiteren kann vorgesehen sein, dass die mindestens eine Laminatfolie eine mindestens dreilagige Folie umfasst oder darstellt mit mindestens zwei Kunststofffolien und mindestens einer zwischen diesen Kunststofffolien liegenden Metallfolie, insbesondere Aluminiumfolie.

Als besonders zweckmäßig haben sich auch solche Folienbeutel erwiesen, bei denen die Laminatfolie auf der Innenseite des Beutels mindestens eine Polyolefinfolie, insbesondere eine Polyethylenfolie oder eine Polypropylenfolie, und auf der Außenseite des Beutels mindestens eine Polyesterfolie, insbesondere PET-Folie, aufweist, vorzugsweise mit einer dazwischen liegenden Aluminiumfolie.

Um in jedem konkreten Fall eine stets zuverlässige Freisetzung der Klebermischung sicherstellen zu können, sind solche Folienbeutel bevorzugt, die über mindestens ein Schwächungsareal, insbesondere ein perforiertes Areal, und/oder mindestens eine Schwächungslinie, insbesondere eine Perforationslinie, verfügen. Hierbei kann vorgesehen sein, dass das mindestens eine Schwächungsareal, insbesondere das perforierte Areal, und/oder die mindestens eine Schwächungslinie, insbesondere die Perforationslinie, sich abschnittsweise oder im Wesentlichen vollständig von einem Ende des Beutels zu dem gegenüberliegenden Ende des Beutels erstreckt und/oder auf derselben Seite des Beutels vorliegt.

Der Folienbeutel kann sowohl einen Einkammerbeutel als auch einen Mehrkammerbeutel darstellen. Der Einsatz von Mehrkammerbeuteln hat in manchen Fällen den Vorteil, dass die einzelnen Kammern beim Eindrehen von Nippelgewinde in das Schachtelgewinde eine großflächigere und/oder zuverlässigere Zerstörung der Kleberbehältnisse gelingt, womit regelmäßig auch eine großflächigere Freisetzung des Klebers bzw. der Klebermischung einhergeht. Bevorzugt liegt der Kleber bzw. die Klebermischung in Form eines Klebermischung-Kits vor, wobei der Härter eine separate Komponente darstellt.

Hierbei kann insbesondere auch auf solche Ausführungsformen zurückgegriffen werden, bei denen der erfindungsgemäße Beutel in mehrere, insbesondere zwei, durch mindestens einen Trennbereich voneinander getrennte, insbesondere benachbarte, Kleberkammern unterteilt ist, die jeweils mindestens eine Komponente der Klebermischung, insbesondere des Klebermischung-Kits, enthalten, wobei vorzugsweise jede der getrennten Kleberkammern das mindestens eine Schwächungsareal, insbesondere ein perforiertes Areal, und/oder die mindestens eine Schwächungslinie, insbesondere eine Perforationslinie, aufweist, das bzw. die sich insbesondere im Wesentlichen von einem Ende der Beutelkammer zu dem gegenüberliegenden Ende der Beutelkammer erstreckt und/oder auf derselben Seite der Beutelkammern vorliegt.

Die Folienbeutel ermöglichen nicht nur die gezielte Zerstörung unter Freisetzung eines darin vorliegenden Klebers bzw. einer darin vorliegenden Klebermischung, sondern ebenfalls die zuverlässige und dauerhafte Aufbewahrung und Lagerung sowie den sicheren Transport der Kleber und Klebermischungen. Es muss kein Austreten bzw. Ausdampfen von Lösungsmittel oder sonstigen Kleberkomponenten befürchtet werden. Auch kann mit den erfindungsgemäßen Folienbeuteln ein vorzeitiges Aushärten der darin vorliegenden Kleber bzw. Klebermischung verhindert werden. Luft bzw. Sauerstoff und/oder Feuchtigkeit dringen regelmäßig nicht in den erfindungsgemäßen Folienbeutel ein.

Ein Folienbeutelstrang umfasst mindestens zwei, vorzugsweise eine Vielzahl an in Reihe vorliegenden und miteinander verbundenen erfindungsgemäßen Folienbeuteln.

Der Folienbeutelstrang liegt zum Beispiel dann in Reihe vor, wenn sich an das eine Ende eines Folienbeutels das Ende eines benachbarten Folienbeutels direkt, zum Beispiel nur durch eine querverlaufende Schweißnaht getrennt, oder indirekt, zum Beispiel durch einen verschweißten Folienabschnitt getrennt, anschließt und wenn sich wiederum das gegenüberliegende Ende dieses benachbarten Folienbeutels an das Ende eines weiteren Folienbeutels anschließt, wobei diese Art der Aneinanderreihung von einzelnen, jeweils benachbarten Beuteln in entsprechender Weise fortgesetzt werden kann. Auf diese Weise erhält die Vielzahl an in Reihe angeordneten Folienbeuteln eine Längsorientierung. Ein solcher Folienbeutelstrang kann beispielsweise wie eine Kette oder ein dickes Seil auf eine Welle aufgewickelt werden.

In einer besonders zweckmäßigen Ausgestaltung des Folienbeutels ist vorgesehen, dass dieser aus mindestens einer, vorzugsweise im Wesentlichen durchgängigen, Laminatfolie gebildet ist oder eine solche umfasst.

Der zwischen benachbarten Folienbeuteln vorliegende Übergangsbereich wird vorzugsweise aus zwei miteinander verschweißten Laminatfolien gebildet. Dieses ermöglicht eine sehr verfahrensökonomische und materialsparende Vorgehensweise bei der Herstellung Folienbeutelstränge. Hierbei sind einzelne, zunächst separat vorliegende Folienbeutel nicht miteinander zu verbinden (was auch eine mögliche Ausführungsvariante wäre), sondern eine durchgehende Folienlaminatbahn wird unter Ausbildung der Folienbeutel seitlich sowie an den gegenüberliegenden Kopfenden unter Ausbildung der Beutel miteinander verschweißt. Selbstverständlich ist es auch möglich und zudem besonders praktikabel, zwei auf- bzw. übereinanderliegende Folienbahnen unter Ausbildung einer Reihe an aufeinander folgenden Folienbeutel miteinander zu verschweißen. Die Übergangsbereiche zwischen zwei benachbarten Folienbeuteln sind dabei dann aus zwei miteinander verschweißten Folienbahnen gebildet.

Demgemäß kann der Folienbeutelstrang in einer geeigneten Ausgestaltung aus der mindestens einen, vorzugsweise im Wesentlichen durchgängigen, Laminatfolie gebildet sein oder eine solche umfassen.

Auch kann alternativ oder zusätzlich vorgesehen sein, dass die Trennbereiche benachbarter, in Reihe vorliegender Folienbeutel im Wesentlichen gleichgerichtet angeordnet sind, insbesondere ineinander übergehen. Dieser Trennbereich kann z.B. eine Schweißnaht oder ein verschweißter Folienbereich sein. In einer pragmatischen Ausgestaltung verläuft diese Schweißnaht bzw. -bereich im Wesentlichen gleichgerichtet zur longitudinalen Erstreckung des Folienstrangs, insbesondere im Wesentlichen parallel zu dessen Seitenrändern. Selbstverständlich können auch zwei oder mehr Trennbereiche, z.B. in Form von Schweißlinien oder -bereichen nebeneinander vorliegen und die Folienbeutel bzw. den Folienbeutelstrang in drei oder mehr Kammern unterteilen, die entweder sämtlich mit dem Kleber oder mit einzelnen, den Kleber bildenden Komponenten befüllt sein.

Solche Folienbeutel oder Folienbeutelstränge tragen besonders zweckmäßig zur Lösung der Aufgabe bei, bei denen die Schwächungsareale oder die Schwächungslinien der Folienbeutel, insbesondere jeweils benachbarter Folienbeutel, eine Erstreckung aufweisen, die im Wesentlichen der Erstreckung der in Reihe vorliegenden Folienbeutel entspricht und insbesondere relativ zur Form der Folienbeutel im Wesentlichen gleichgerichtet angeordnet sind und/oder insbesondere sich im Wesentlichen von einem Ende des Beutelstrangs zu dem gegenüberliegenden Ende des Beutelstrangs erstrecken und/oder insbesondere auf derselben Seite des Beutelstrangs vorliegen.

Ein kohlenstoffhaltiger Nippel mit mindestens einem Nippelgewinde, insbesondere für kohlenstoffhaltige Elektroden, umfasst
mindestens eine Einlassung (auch erste Einlassung genannt) in dem mindestens einen Nippelgewinde, geeignet für die Aufnahme mindestens eines Kleberbehältnisses enthaltend einen flüssigen oder pastösen thermisch und/oder chemisch härtenden Kleber, insbesondere Klebermischung, zur Sicherung einer Elektroden/Nippel-Verbindung,
insbesondere in sämtlichen Nippelgewinden,
insbesondere Nut (auch erste Nut genannt), die das Nippelgewinde quer, insbesondere im Wesentlichen senkrecht zu diesem Gewinde, durchläuft,
wobei die Einlassung, insbesondere die Nut, mindestens abschnittsweise, insbesondere im Wesentlichen vollständig, hinterschnitten ist.

Hierbei kann die erste Einlassung, insbesondere die Nut, vorzugsweise in dem hinterschnittenen Abschnitt, tiefer oder höher sein als die Gewindetiefe oder eine Tiefe aufweist, die der Gewindetiefe im Wesentlichen entspricht. Besonders bevorzugt ist die Tiefe der ersten Einlassung bzw. der ersten Nut tiefer ist als die Gewindetiefe.

In einer besonders zweckmäßigen Ausgestaltung weist die Einlassung, insbesondere die Nut, einen im Wesentlichen trapezförmigen Querschnitt auf.

Geeignete kohlenstoffhaltige Nippel umfassen Nippel aus carbonisiertem oder graphitiertem Material sowie aus carbonisiertem und graphitiertem Material.

Ein kohlenstoffhaltiger Nippel ist regelmäßig derart ausgestaltet, dass dieser zwei kohlenstoffhaltige Elektroden miteinander verbindet. Dieses gelingt am praktikabelsten durch einen sogenannten Doppelnippel, bei dem Nippelgewinde jeweils an den gegenüberliegenden Enden vorliegen oder sich das Gewinde von einem Ende des Nippels bis zu dem gegenüberliegenden Ende des Nippels erstreckt. Hierbei können erste und/oder zweite Einlassungen bzw. Nuten nur in einem wie auch in beiden Nippelgewinden des Doppelnippels vorliegen. Die in den beiden Nippelgewinden vorliegenden Einlassungen können symmetrisch wie auch unsymmetrisch zueinander angeordnet sein. In diesen Einlassungen, insbesondere in beiden sich gegenüberliegenden Nippelgewinden können dann die hier beschriebenen Kleberbehältnisse vorliegen. Unter einem Nippelgewinde im Sinne der vorliegenden Erfindung soll, unabhängig davon, ob bei einem kohlenstoffhaltigen Nippel oder einer kohlenstoffhaltigen Elektrode vorliegend, ein Gewinde verstanden werden, das dazu geeignet ist, von einer Schachtel einer kohlenstoffhaltigen Elektrode aufgenommen zu werden, d.h. in das Schachtelgewinde der Schachtel eingedreht zu werden, um letztendlich zwei kohlenstoffhaltige Elektroden miteinander verbinden zu können.

Als besonders zweckmäßig haben sich zylindrische oder doppelkonische Doppelgewindenippel erwiesen.

Unter die beschriebene Nippel fallen auch solche Nippel, die zusätzlich auch mindestens eine zweite Nut, welche, anders als die erste Nut, nicht hinterschnitten ist, aufweisen und die das Nippelgewinde quer, insbesondere im Wesentlichen senkrecht zu diesem Gewinde, durchläuft.

Ein Nippel-Kit umfasst
mindestens einen kohlenstoffhaltigen Nippel, insbesondere für kohlenstoffhaltige Elektroden, umfassend
mindestens eine Einlassung in dem mindestens einen Nippelgewinde, insbesondere sämtlichen Nippelgewinden,
insbesondere eine Nut, die das Nippelgewinde quer, insbesondere im Wesentlichen senkrecht zu diesem Gewinde, durchläuft,
insbesondere einen kohlenstoffhaltigen Nippel, und mindestens ein Kleberbehältnis, insbesondere in der Einlassung vorliegend, enthaltend einen flüssigen oder pastösen thermisch und/oder chemisch härtenden Kleber, insbesondere Klebermischung, zur Sicherung einer Elektroden/Nippel-Verbindung, insbesondere einen Beutel und/oder mindestens einen Beutelstrang, wobei das Kleberbehältnis optional mindestens ein Schwächungsareal, insbesondere ein perforiertes Areal, und/oder mindestens eine Schwächungslinie, insbesondere eine Perforationslinie, aufweist, vorzugsweise sich im Wesentlichen von einem Ende des Kleberbehältnisses zu dem gegenüberliegenden Ende des Kleberbehältnis erstreckend und/oder auf derselben Seite des Kleberbehältnisses vorliegend.

Hierbei können mindestens ein Beutel bzw. Kleberbehältnis, zum Beispiel mindestens ein Beutelstrang, enthaltend eine flüssige oder pastöse thermisch und/oder chemisch härtende bzw. härtbare Klebermischung zur Sicherung einer Nippel/ElektrodenVerbindung, in der mindestens einen ersten Einlassung, insbesondere ersten Nut, und der mindestens einen zweiten Einlassung, insbesondere zweiten Nut, vorliegen.

Das Kleberbehältnis kann aus vielfältigen Materialien gefertigt sein. Diese Materialien sollten in der Lage sein, ein Aushärten des darin vorliegenden Klebers bzw. der Klebermischung während der Lagerdauer zu verhindern, nicht selber mit dem Kleber reagieren, widerstandsfähig genug sein, um nicht sogleich bei der Befüllung, dem Transport oder der gattungsgemäßen Handhabung beschädigt zu werden und nichtsdestotrotz beim Ineinandergreifen von Schachtel- und Nippelgewinde unter Freisetzung des Klebers aufgerissen werden können. Geeignete Materialien für das Kleberbehältnis umfassen z.B. ein- oder mehrlagige bzw. laminierte Kunststofffolien sowie Verpackungen aus Papier oder aus Verbundpapier, gegebenenfalls mit einer Metalllage und/oder einer Silikonlage kaschiert. Die Kleberbehältnisse können als Beutel, d.h. als Behältnis mit flexiblen Wandungen vorliegen, können aber auch beliebige andere Behältnisformen annehmen, beispielsweise Karton- bzw. kartonähnliche Verpackungen, d.h. mit Wandungen, die nicht flexibel, sondern in bestimmten Umfang formstabil sind.

Die Erläuterungen beispielsweise zur Anbringung und Art von Schwächungsbereichen bzw. -linien bzw. von Perforationsbereichen bzw. -linien, wie vorangehend für die Beutel und Beutelstränge beschrieben, gelten selbstverständlich in gleicher Weise ganz allgemein auch für die für die Gegenstände verwendeten Kleberbehältnisse.

Bei dem Nippel-Kit kann das Kleberbehältnis, beispielsweise der Beutel bzw. Beutelstrang in der ersten bzw. zweiten Einlassung bzw. Nut vorliegen, muss es jedoch nicht, wobei jedoch erstere Ausführungsform bevorzugt ist. Das Kleberbehältnis, beispielsweise der Beutel bzw. Beutelstrang haben allerdings geeignet und darauf eingerichtet zu sein, um in diese erste bzw. zweite Einlassung bzw. Nut eingebracht bzw. eingelegt zu werden.

Dabei kann vorgesehen sein, dass mindestens eine Einlassung (erste Einlassung), insbesondere mindestens eine Nut (erste Nut), hinterschnitten ist und/oder dass mindestens eine Einlassung (auch zweite Einlassung genannt), insbesondere mindestens eine Nut (auch zweite Nut genannt), nicht hinterschnitten ist. Der in dem Kleberbehältnis, insbesondere dem Folienbeutel bzw. Folienbeutelstrang, vorliegende Kleber bzw. die Klebermischung ist, solange in dem unzerstörten Behältnis vorliegend noch nicht ausgehärtet. Mit anderen Worten in diesem Kleberbehältnis liegt der Kleber bzw. die Klebermischung als sogenannter härtbarer bzw. härtender Kleber vor. Um auszuhärten bedarf er noch der Initiierung, beispielsweise dem Kontakt mit dem Sauerstoff oder der Feuchtigkeit der Luft oder der Vermengung mit einem geeigneten Initiator/Härter.

Ein Nippel mit Nippelgewinde, insbesondere für kohlenstoffhaltige Elektroden, umfasst mindestens eine zweite Nut, die das Nippelgewinde quer, insbesondere im Wesentlichen senkrecht zu diesem Gewinde, durchläuft und die nicht hinterschnitten ist, wobei in der zweiten Nut mindestens ein Beutel oder mindestens ein Beutelstrang, enthaltend eine flüssige oder pastöse thermisch und/oder chemisch härtende bzw. härtbare Klebermischung zur Sicherung einer Nippel/ElektrodenVerbindung, insbesondere ein Beutel und/oder mindestens ein Beutelstrang, vorliegt.

Besonders bevorzugten Nippel zeichnen sich dadurch aus, dass die Querschnittsform der ersten und/oder zweiten Einlassung, insbesondere ersten und/oder zweiten Nut, und die Querschnittsform des Kleberbehältnisses, insbesondere des Beutels und/oder des Beutelstrangs, insbesondere in Form und/oder Größe, im Wesentlichen korrespondieren.

Die Querschnittsform der Einlassung und die Querschnittsform des Kleberbehältnisses, insbesondere des Beutels bzw. Beutelstrangs, kor-respondieren nicht nur dann, wenn die Maße des Kleberbehältnisses exakt auf die Maße der Einlassung abgestimmt sind, sondern auch dann, wenn keine solche exakte Übereinstimmung vorliegt, das Kleberbehältnis gleichwohl in die Einlassung eingebracht werden kann. Indem das Kleberbehältnis in die in dem Gewinde vorliegenden Einlassung eingebracht werden kann, wird einerseits das einwandfreie Eindrehen des Nippelgewindes in das Schachtelgewinde gewährleistet und andererseits sichergestellt, dass bei diesem Eindrehen das Kleberbehältnis durch die ineinandergreifenden Nippel- und Schachtelgewinde unter Freisetzung des Klebers zerstört wird. Durch die Einlassung bzw. deren relative Dimensionierung in Bezug auf das Kleberbehältnis, insbesondere in Form und Größe, in dem Nippel- bzw. Schachtelgewinde wird sichergestellt, dass es beim Eindrehen von Nippel- in das Schachtelgewinde zu einer Zerstörung des Kleberbehältnisses und zu einer Freisetzung und breitflächigen Verteilung des Klebers kommt. Hierbei ist im Allgemeinen allein dafür Sorge zu tragen, dass das in die Einlassung eingebrachte bzw. vorliegende Kleberbehältnis über das Querschnittsprofil von Nippel- bzw. Schachtelgewinde, welche zweckmäßigerweise aufeinander abgestimmt zu sein haben, hinausragt. Dieses zumindest abschnittsweise Hinausragen des Kleberbehältnisses über das Gewindeprofil ist bereits ausreichend für das Hinausragen über das Nippel- bzw. Schachtelgewinde. D.h. das Kleberbehältnis, das in der, vorzugsweise hinterschnittenen Einlassung vorliegt, hat nicht notwendigerweise über die Flankenspitze des Nippel- oder Schachtelgewindes hinauszuragen, wenn in der Einlassung vorliegend (wenngleich dieses ebenfalls eine praktikable erfindungsgemäße Ausführungsform darstellt), sondern es reicht bereits aus, wenn das gefüllte Kleberbehältnis über mindestens einen Flankengrund eines Nippel- oder Schachtelgewindes, wenn in der jeweiligen Einlassung vorliegend, hinausragt. Auf diese Weise wechselwirken die jeweiligen Gewinde mit dem Kleberbehältnis und es wird letztendlich eine Kleberfläche generiert, die weit über die Fläche hinausgeht, die von der Einlassung abgedeckt wird. Hierdurch gelingt eine sehr feste und dauerhafte Anbindung der kohlenstoffhaltigen Elektrode an den kohlenstoffhaltigen Nippel, und zwar selbst dann, wenn es zur Rissbildung in der Elektrode kommt, was häufig dann der Fall ist, wenn die Elektrode schon stark verbraucht ist und z.B. nur noch als sogenannter Elektrodenstummel vorliegt. D.h. auch bei Rissbildung fallen die Elektrodenstummel nicht von dem Nippel ab, sondern werden dank der Kleberanbindung in ihrer Position gehalten. Mit der vorliegenden Erfindung wird somit insbesondere die Aufgabe gelöst, die Bildung von kohlenstoffhaltigen (Elektroden- bzw. Nippel-) Reststückabfällen insbesondere bei der Herstellung bzw. Gewinnung, dem Recycling oder der Verarbeitung von z.B. Stahl, Kupfer, Silizium, Calciumcarbid, Phosphor oder anderen Materialien in einem Lichtbogenofen oder Pfannenofen vermeiden bzw. jedenfalls stark reduzieren zu können. Hierdurch kommt es zu einer Maximierung des verwendbaren Elektroden- und Nippelmaterials, zu einer Reduzierung oder gar Vermeidung der Verunreinigung des aufgeschmolzenen Materials mit Kohlenstoffrückständen und damit einhergehend zu einer optimierten, ökonomischeren Verfahrensführung.

Besonders geeignet sind auch solche Nippel-Kits, wobei das in der mindestens einen Einlassung, insbesondere der Nut, vorliegende Kleberbehältnis derart dimensioniert ist, dass es über das Nippelgewinde mindestens abschnittsweise hinausragt, wobei insbesondere das bzw. die Schwächungsareale und/oder -linien im Wesentlichen mindestens überwiegend, insbesondere vollständig, in dem Bereich des Kleberbehältnisses vorliegen, der über das Nippelgewinde hinausragt.

Eine kohlenstoffhaltige Elektrode, insbesondere für Lichtbogenöfen, umfasst mindestens eine Elektrodenschachtel mit einem Schachtelgewinde, wobei in dem Schachtelgewinde mindestens eine Einlassung, insbesondere eine Nut, vorliegt, geeignet für die Aufnahme mindestens eines Kleberbehältnisses, enthaltend einen flüssigen oder pastösen thermisch und/oder chemisch härtenden Kleber, insbesondere Klebermischung, zur Sicherung einer Elektroden/Nippel-Verbindung, wobei gegebenenfalls diese Nut das Schachtelgewinde insbesondere quer, vorzugsweise im Wesentlichen senkrecht zu diesem Gewinde, durchläuft.

Hierbei ist vorzugsweise vorgesehen, dass die dritte Einlassung bzw. Nut der Elektrode zumindest abschnittsweise tiefer ist als das Schachtelgewinde.

Als besonders zweckmäßig haben sich auch solche Elektroden erwiesen, bei denen die mindestens eine Einlassung (auch dritte Einlassung genannt), insbesondere die mindestens eine Nut (auch dritte Nut genannt), hinterschnitten ist und/oder dass die mindestens eine Einlassung (auch vierte Einlassung genannt), insbesondere die mindestens eine Nut (auch vierte Nut genannt), nicht hinterschnitten ist. Erneut kann durch Verwendung einer hinterschnittenen Nut der

Beutel oder der Beutelstrand enthaltend die Kleebergmischung in der Weise sicher in dieser Nut platziert werden, dass nicht befürchtet werden muss, dass bei gattungsgemäßer Verwendung der Beutel bzw. der Beutelstrang aus der Nut herausgelangt, beispielsweise herausrutscht oder herausfällt.

Insbesondere zu diesem Zweck ist es von Vorteil, wenn die mindestens eine Nut (dritte Nut) einen im Wesentlichen trapezförmigen Querschnitt aufweist.

Ein Nippel oder eine Elektrode ist kohlenstoffhaltig bzw. ein Kohlenstoffnippel oder eine Kohlenstoffelektrode im Sinne der Erfindung, wenn sie Graphit, d.h. graphitischen Kohlenstoff enthält oder hieraus besteht wie auch, wenn sie nicht graphitischen Kohlenstoff, sondern carbonisierten Kohlenstoff enthält oder hieraus besteht. Selbstverständlich können auch beliebige Mischungen aus graphitischem und nicht-graphitischem, insbesondere carbonisiertem Kohlenstoff für die genannten Nippel und/oder Elektroden verwendet werden. Die Elektrode umfasst vorzugsweise eine Graphitelektrode.

Die Einlassung ist regelmäßig derart in das Nippel- bzw. Elektrodengewinde unter partieller Aufhebung bzw. Unterbrechung des Gewindeverlaufs eingearbeitet, dass darin das gefüllte Kleberbehältnis eingelegt werden kann. Indem die Einlassung im Bereich des Gewindeverlaufs vorliegt und nicht etwa in dem Bodenbereich von Elektrodenschachtel oder Nippel, ist es erstmalig möglich, schon während des Eindrehens des Nippelgewindes in das Schachtelgewinde ein sehr breitflächige Verteilung des Klebers bzw. der Klebermischung zu erreichen. Eine Einlassung im Sinne der Erfindung umfasst ebenfalls eine Bohrung in dem Gewinde, beispielsweise mit einer kreisförmigen oder ovalen Umrissform.

Auch solche Elektroden lösen das der Erfindung zugrunde liegende Problem, die ferner, der Elektrodenschachtel mit dem Schachtelgewinde gegenüberliegend, ein Nippelgewinde oder ein weiteres Schachtelgewinde, insbesondere als integraler Bestandteil der Elektrode, enthalten, wobei dieses Nippelgewinde der Elektrode insbesondere mindestens eine Einlassung (auch fünfte Einlassung genannt) in dem Nippelgewinde,
insbesondere Nut (auch fünfte Nut genannt), die das Nippelgewinde insbesondere quer, vorzugsweise im Wesentlichen senkrecht zu diesem Gewinde, durchläuft, umfasst.

Selbstverständlich umfassen die Elektroden auch solche Ausführungsformen, bei denen an den beiden gegenüberliegenden Enden der kohlenstoffhaltigen Elektrode Elektrodenschachteln mit Schachtelgewinden vorliegen, insbesondere mit Schachtelgewinden enthaltend Einlassungen, vorzugsweise hinterschnittene Einlassungen bzw. Nuten zur Aufnahme der hierin beschriebenen gefüllten Kleberbehältnisse.

Ein Elektroden-Kit umfasst
mindestens eine Elektrode und mindestens ein Kleberbehältnis, insbesondere in der mindestens einen Einlassung von Schachtelgewinde und/oder Nippelgewinde, enthaltend einen flüssigen oder pastösen thermisch und/oder chemisch härtenden Kleber, insbesondere Klebermischung, zur Sicherung einer Elektroden/Nippel-Verbindung, insbesondere einen Beutel und/oder Beutelstrang, wobei das Kleberbehältnis optional mindestens ein Schwächungsareal, insbesondere ein perforiertes Areal, und/oder mindestens eine Schwächungslinie, insbesondere eine Perforationslinie, aufweist, vorzugsweise sich im Wesentlichen von einem Ende des Kleberbehältnisses zu dem gegenüberliegenden Ende des Kleberbehältnis erstreckend und/oder auf derselben Seite des Kleberbehältnisses vorliegend. Eine vorteilhafte und besonders praktikable Weiterbildung der Elektrode umfasst somit mindestens einen Beutel oder mindestens einen Beutelstrang, enthaltend eine flüssige oder pastöse thermisch und/oder chemisch härtende bzw. härtbare Klebermischung zur Sicherung einer Nippel/Elektroden-Verbindung, insbesondere einen Beutel und/oder mindestens einen Beutelstrang, wobei der Beutel und/oder der Beutelstrang in der mindestens einen dritten Nut vorliegt.
Hierbei ist auch von Vorteil, wenn dafür Sorge tragen wird, dass die Querschnittsform der dritten und/oder vierten und/oder fünften Einlassung, insbesondere der dritten und/oder vierten und/oder fünften Nut, und die Querschnittsform des Kleberbehältnisses, insbesondere eines Beutels und/oder eines Beutelstrangs, insbesondere in Form und/oder Größe, im Wesentlichen korrespondieren.

Ein solcher Elektroden-Kit löst die der Erfindung zugrunde liegende Aufgabe in praktikabler Weise, bei dem das in der mindestens einen Einlassung, insbesondere der Nut, vorliegende Kleberbehältnis derart dimensioniert ist, dass es über das Schachtelgewinde und/oder das Nippelgewinde mindestens abschnittsweise hinausragt, wobei insbesondere das bzw. die Schwächungsareale und/oder -linien im Wesentlichen mindestens überwiegend, insbesondere vollständig, in dem Bereich des Kleberbehältnisses vorliegen, der über das Schachtelgewinde und/oder Nippelgewinde hinausragt.

Ein Elektroden/Nippel-System wird
erhalten durch Eindrehen
eines Nippelgewindes eines kohlenstoffhaltigen Nippels, insbesondere eines Nippelgewindes des Nippels oder des Nippel-Kits oder der Elektrode und/oder des Elektroden-Kits enthaltend ein Nippelgewinde, in das Schachtelgewinde des Gewindeschachts einer kohlenstoffhaltigen Elektrode, insbesondere für Lichtbogenöfen, insbesondere einer Elektrode und/oder eines Elektroden-Kits, wobei das Nippelgewinde und/oder das Schachtelgewinde mindestens eine Einlassung, insbesondere eine Nut, aufweist, enthaltend mindestens ein Kleberbehältnis, enthaltend einen flüssigen oder pastösen thermisch und/oder chemisch härtenden Kleber, insbesondere Klebermischung, zur Sicherung der Elektroden/Nippel- bzw. der Elektroden/Elektroden-Verbindung, insbesondere mindestens einen Beutel und/oder mindestens einen Beutelstrang, unter zumindest partieller Zerstörung des Kleberbehältnisses, insbesondere im Bereich und/oder entlang mindestens eines optionalen Schwächungsareals oder mindestens einer Schwächungslinie, und unter Freisetzung des Klebers und gegebenenfalls des Härters bzw. der Klebermischung.

Unter den Elektroden/Nippel-Systemen haben sich solche als besonders zweckmäßig erwiesen, bei denen das mindestens eine Schwächungsareal, insbesondere ein perforiertes Areal, und/oder die mindestens eine Schwächungslinie, insbesondere eine Perforationslinie, sich im Wesentlichen von einem Ende des Kleberbehältnisses zu dem gegenüberliegenden Ende des Kleberbehältnis erstreckt und/oder auf derselben Seite des Kleberbehältnisses vorliegt.

Dabei kann vorgesehen sein, dass die Einlassung die erste, zweite, dritte, vierte und/oder fünfte Einlassung, insbesondere die erste, zweite, dritte, vierte und/oder fünfte Nut, darstellt.

Von besonderem Vorteil sind hierbei solche Ausführungsvarianten, bei denen das in der Einlassung, insbesondere in der ersten, zweiten, dritten, vierten und/oder fünften Einlassung, vorzugsweise ersten, zweiten, dritten, vierten und/oder fünften Nut, vorliegende Kleberbehältnis derart dimensioniert ist, dass es vor dem oder während des Eindrehens über das Nippelgewinde bzw. Schachtelgewinde mindestens abschnittsweise hinausragt, wobei vorzugsweise das bzw. die Schwächungsareale und/oder -linien im Wesentlichen mindestens überwiegend, insbesondere vollständig, in dem Bereich des Kleberbehältnisses vorliegen, der über das Nippelgewinde bzw. Schachtelgewinde hinausragt

Der Beutel und/oder der Beutelstrang und/oder der Nippel und/oder der Nippel-Kit und/oder die erfindungsgemäße Elektrode und/oder der erfindungsgemäße Elektroden-Kit und/oder das erfindungsgemäße Elektroden/Nippel-System kommen zur Reduzierung oder Eliminierung von Reststückabfällen kohlenstoffhaltiger Elektroden und/oder Nippel und/oder bei metallurgischen Verfahren in einem Lichtbogenofen oder einem Pfannenofen, insbesondere beim Aufschmelzen von Stahl oder Stahlschrott, oder bei der Herstellung bzw. Gewinnung, Recycling oder Verarbeitung von Calciumcarbid, Kupfer, Silizium, Phosphor oder anderen Materialien zum Einsatz.

Ein Verfahren zur Herstellung bzw. zur Gewinnung, Recycling oder Verarbeitung von Stahl, Kupfer, Silizium, Calciumcarbid, Phosphor oder anderen Materialien in einem Lichtbogenofen oder einem Pfannenofen, umfasst
das Einschrauben eines Nippelgewindes des Nippels des erfindungsgemäßen Nippel-Kits in ein korrespondierendes Schachtelgewinde einer kohlenstoffhaltigen Elektrode; oder
das Einschrauben eines Nippelgewindes des erfindungsgemäßen Elektroden-Kits, wobei die Elektrode neben dem Schachtelgewinde auch ein Nippelgewinde aufweist, in ein korrespondierendes Schachtelgewinde einer kohlenstoffhaltigen Elektrode; oder
das Einschrauben eines Nippelgewindes eines kohlenstoffhaltigen Nippels in ein korrespondierendes Schachtelgewinde eines erfindungsgemäßen Elektroden-Kits; oder
Einschrauben eines Nippelgewindes eines erfindungsgemäßen Nippel-Kits in ein korrespondierendes Schachtelgewinde eines erfindungsgemäßen Elektroden-Kits, jeweils unter Zerstörung mindestens eines Folienbeutels beim Einschrauben und unter Freisetzung des flüssigen oder pastösen thermisch und/oder chemisch härtenden Klebers, insbesondere der Klebermischung;
Verteilen des freigesetzten Klebers, insbesondere der Klebermischung, während des Einschraubens über die von der Einlassung, insbesondere Nut, abgedeckte Fläche hinaus zwischen Nippel- und Schachtelgewinde; sowie
Aushärten dieses freigesetzten Klebers, insbesondere der Klebermischung, insbesondere bei erhöhter Temperatur, beispielsweise im Bereich von Raumtemperatur bis 250°C, vorzugsweise im Bereich oberhalb von 50°C, und/oder vorzugsweise über einen Zeitraum von mindestens fünf Minuten.

Einer der mit der Erfindung einhergehenden Vorteile ist darin zu sehen, dass der beim Eindrehen des Nippelgewindes in das Schachtelgewinde freigesetzte und großflächig infolge der Drehbewegung verteilte Kleber unter den Arbeitsbedingungen der Elektrode aushärtet. In der Regel weist das die Verbindung mit dem Nippel eingehende Elektrodenende eine Temperatur im Bereich von etwa 100°C auf. Es bedarf folglich keines zusätzlichen Aushärt- bzw. Arbeitsschrittes. Die routinemäßigen Abläufe bzw. Verfahrensschritte brauchen demzufolge nicht abgeändert und können beibehalten werden.

Ein Lichtbogenofen oder ein Pfannenofen, insbesondere zur Herstellung bzw. Gewinnung, Recycling oder Verarbeitung von Stahl, Kupfer, Silizium, Calciumcarbid, Phosphor oder anderen Materialien, enthält mindestens einen erfindungsgemäßen Nippel und/oder mindestens einen erfindungsgemäßen Nippel-Kit und/oder mindestens eine erfindungsgemäße Elektrode und/oder mindestens einen erfindungsgemäßen Elektroden-Kit und/oder mindestens ein erfindungsgemäßes Elektroden/Nippel-System. Geeignete Öfen umfassen hierbei sowohl Gleichstromwie auch Wechselstromöfen. Die erfindungsgemäßen Gegenstände können nicht nur für primär-, sondern auch für sekundärmetallurgische Verfahren eingesetzt werden.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1 a) und b): die schematische Seitenansicht eines erfindungsgemäßen doppelkonischen Nippels mit einer bzw. zwei im Wesentlichen senkrecht zum Nippelgewinde verlaufenden Nuten,
- Figur 2 a) und b): die schematische Schnittansicht der Nippel gemäß Figuren 1 a) und b),
- Figur 3 a) bis c): die Querschnittsansicht von Nuten von Nippel,
- Figur 4 a) bis f): schematische Seiten- und Querschnittsansichten von Folienbeutel und Folienbeutelstränge,
- Figur 5 a) bis e): schematische Querschnittsansichten von mit erfindungsgemäßen Beuteln gefüllten Nuten erfindungsgemäßer Nippel,
- Figur 6: eine schematische Seitenansicht eines mit einer Elektrode verbundenen Nippels,
- Figur 7: eine schematische Schnittansicht einer Elektroden/Nippel-Verbindung,
- Figur 8: eine schematische Seitenansicht eines Nippels nach Verschraubung mit einer Elektrode,
- Figur 9: eine schematische Seitenansicht einer Elektrodenverbindung ohne Nippel,
- Figur 10: eine schematische Seitenansicht einer weiteren Ausgestaltung eines Nippels,
- Figur 11: eine schematische Querschnittsansicht des Nippels gemäß Figur 10 und
- Figur 12 a) und b): schematische Ansichten von Folienbeutel.

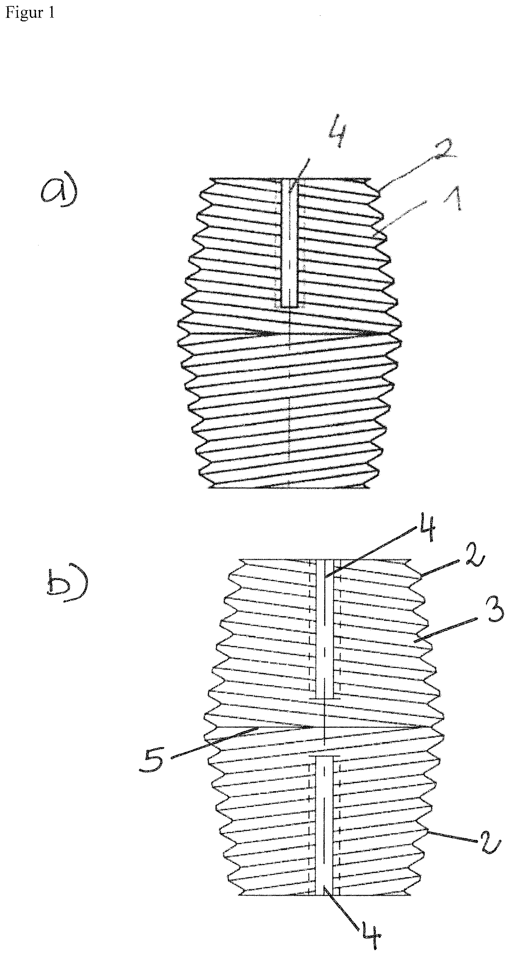

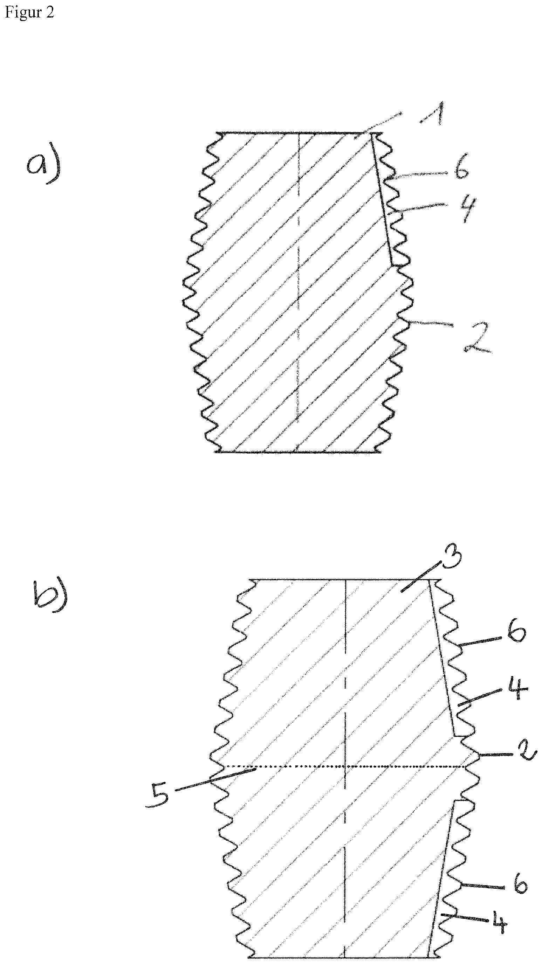

Figur 1 a) zeigt einen doppelkonischen Nippel 1 mit einem Nippelgewinde 2, das quer bzw. im Wesentlichen senkrecht zu diesem Nippelgewinde mit einer hinterschnittenen ersten Nut 4 durchzogen ist, die sich nahezu über die gesamte obere Hälfte des Nippelgewindes erstreckt. Wie der Figur 2 a) zu entnehmen ist, ist die Tiefe der Nut 4 von größerer Ausdehnung als die Tiefe der Gewindegänge 6 des Nippelgewindes 2. In entsprechender Weise zeigen die Figuren 1 b) und 2 b) einen doppelkonischen Nippel 3, der auf beiden Seiten des Äquators 5 jeweils eine Nut 4 aufweist, in die zerstörbare Kleberbehältnisse eingepasst werden können. Die Figuren 1 b) und 2 b) stellen eine symmetrische Ausführungsform eines Nippels 3 dar.

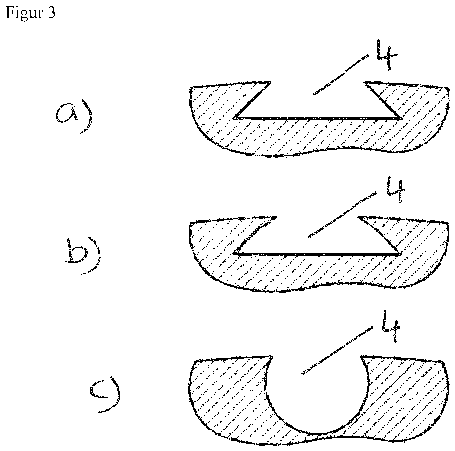

Figur 3 zeigt drei Ausführungsformen hinterschnittener erste Nuten 4, wie sie sowohl mit dem erfindungsgemäßen Nippel 1 bzw. 3 wie auch mit der erfindungsgemäßen Elektrode verwendet werden können. Während der Querschnitt der Nut gemäß Figur 3 a) trapezförmig und der der Nut gemäß Figur 3 b) im Wesentlichen trapezförmig ist, liegt die hinterschnittene Nut gemäß Figur 3 c) in der Querschnittsform eines Kreisausschnitts vor.

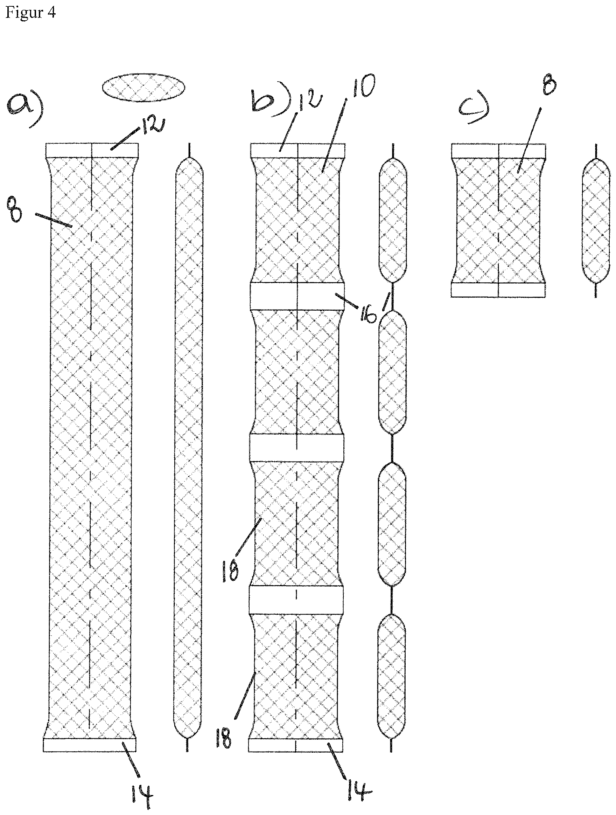

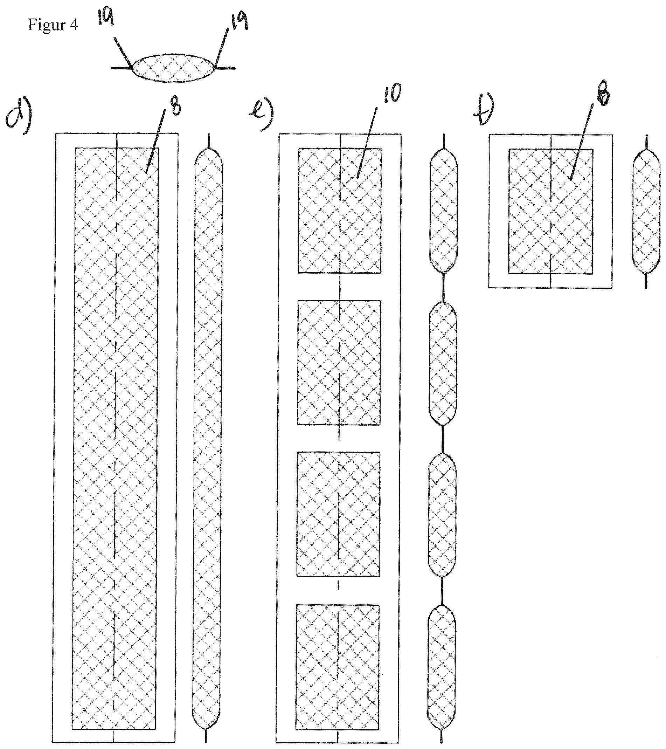

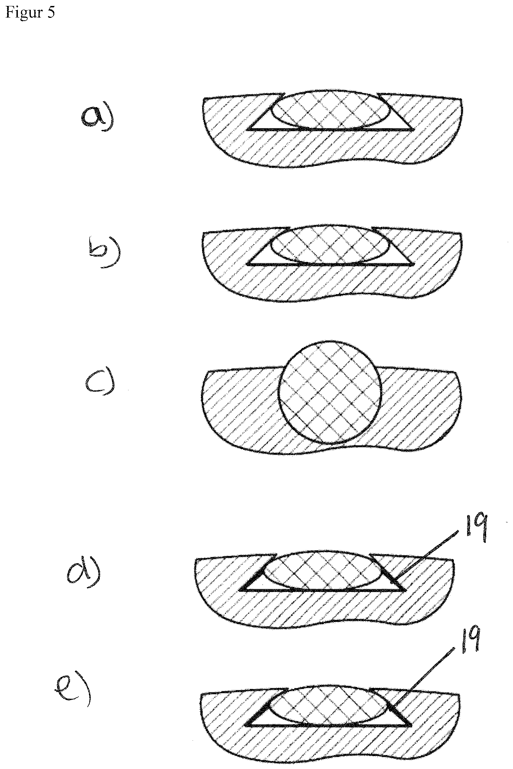

Den Figuren 4 a) bis f) entnimmt man unterschiedliche Ausgestaltungen von Folienbeutel (Ausführungsformen a), c), d) und f)) und Folienbeutelstränge (Ausführungsformen b) und e)). Die für die jeweiligen Folienbeutel und Folienbeutelstränge ebenfalls mit abgebildeten Längsschnittund Querschnittsformen sind derart gestaltet, dass sie mit der Form der Nuten in den Nippeln und Elektroden korrespondieren, wie auch den Figuren 5 a) bis f) ohne weiteres entnommen werden kann.

Bei den Ausführungsformen der Folienbeutel und Folienbeutelstränge gemäß Figuren 4 a) bis c) ist jeweils auf einen Folienschlauch zurückgegriffen worden, der entweder an den sich gegenüberliegenden Enden verschweißt wurde, soweit die Folienbeutel betroffen sind (siehe Figuren 4 a) und c)), oder der darüber hinaus mehrere verschweißte Übergangsabschnitte bzw. -bereiche 16 enthält. Bei der geschilderten Art der Anbringung verschweißter Folienbereiche 16 resultiert ein Folienstrang mit in Reihe vorliegenden, jeweils benachbarten Folienbeuteln 18. D.h. an der einer ersten Verschweißung 14 gegenüberliegenden Seite des Folienbeutels 18 liegt eine Verschweißung vor (Bezugszeichen 16), die wiederum in gleicher Längserstreckung in einen benachbarten Folienbeutel 18 übergeht, welcher wiederum durch eine der ersten Verschweißung 16 gegenüberliegende Verschweißung verschlossen ist.

In entsprechender Weise kann verfahren werden, wenn nicht von einem Folienschlauch, wie bei den Ausführungsformen gemäß Figuren 4 a) bis c) ausgegangen wird, sondern von Folienbeuteln bzw. Folienbeutelsträngen, die durch Verschweißung zweier aneinander angelegter Folienbahnen unter Ausbildung der Übergangsbereiche 16 erhalten worden sind (siehe Figuren d) bis f)). Die verschweißten Randbereiche 19 sich überlappender Folienbahnen sind hierbei breiter ausgeführt, wie insbesondere den Querschnittsansichten der Figuren 4 d) bis f) ohne weiteres zu entnehmen ist. Diese Randbereiche 19 können zu einer noch sichereren Platzierung der Kleberbehältnisse in die insbesondere hinterschnittenen Einlassungen bzw. Nuten beitragen, wie auch die Figuren 5 d) bis e) zeigen.

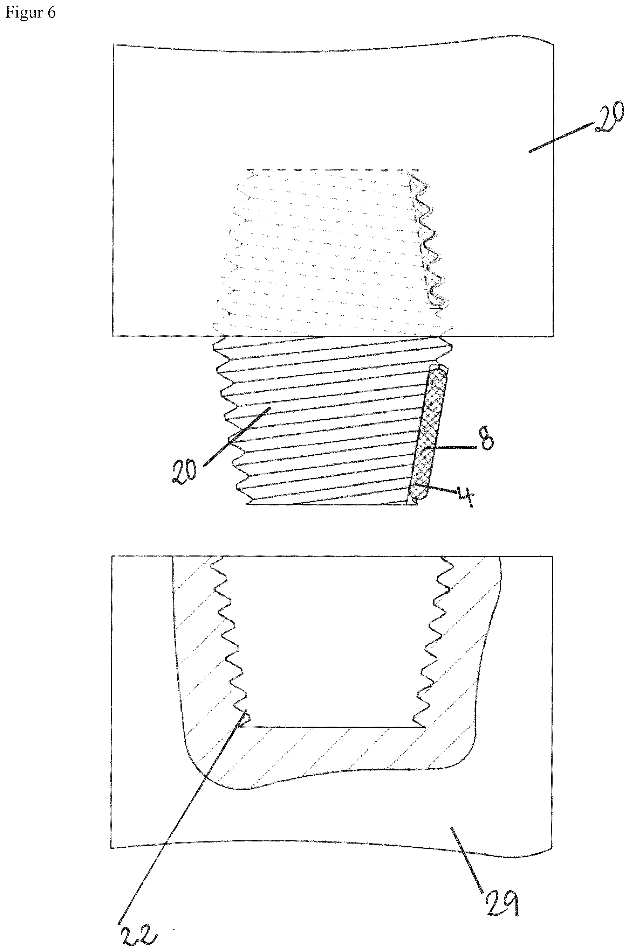

Figur 6 zeigt einen Nippel 2, der mit einer Elektrode 20 verbunden ist, wobei in der Nut 4 des Nippels ein Folienbeutel 8, gefüllt mit einer pastösen Klebermischung vorliegt. Aufgrund der Verwendung einer hinterschnittenen Querschnittsform fällt der in die Nut eingelegte bzw. eingeführte Beutel 8 bei gattungsgemäßem Gebrauch nicht aus der Nut heraus. Das Schachtelgewinde 22 einer weiteren Elektrode 24, mit der das Nippelgewinde zu verbinden ist, ist in Figur 6 bereits angedeutet. Des weiteren ist mit Hilfe der gestrichelten Linien angedeutet, dass der Nippel 2 als doppelkonischer Doppelnippel ausgestaltet ist und dass ein Nippelgewinde des Doppelnippels bereits in dem Schachtelgewinde einer kohlenstoffhaltigen Elektrode vorliegt.

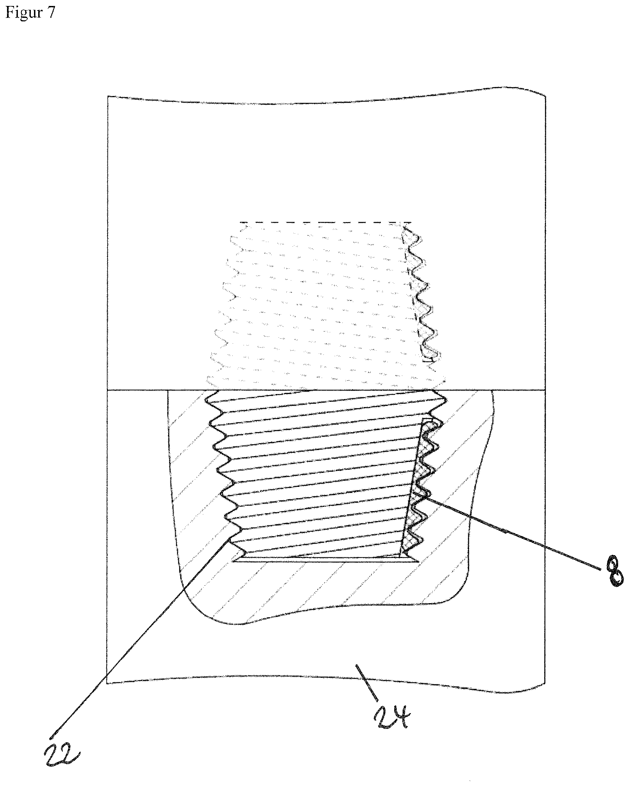

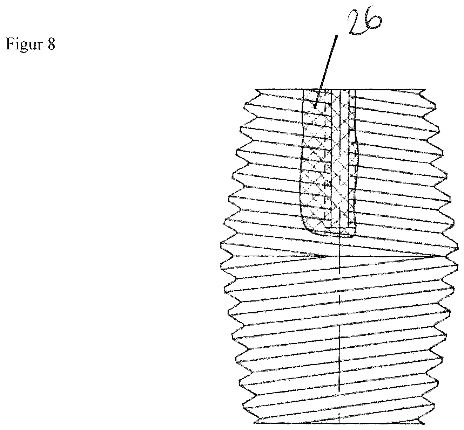

Figur 7 zeigt in schematischer Schnittansicht ein mit dem Nippel 2 gemäß Figur 6 verschraubtes Schachtelgewinde 22 einer weiteren Elektrode 24. Schon während des Verschraubvorgangs wird der Beutel 8 beim Ineinandergreifen von Nippelgewinde und Schachtelgewinde zerstört, so dass die in dem Beutel vorliegende Klebermischung unterstützt durch die Schraubbewegung großflächig zwischen Nippelgewinde und Schachtelgewinde verteilt wird. Die auf diesem Wege erzeugte große Klebefläche 26 ist schematisch in Figur 8 angedeutet. Auch das zweite konische Nippelgewinde des Doppelnippels wurde, wie durch die gestrichelten Linien angedeutet, unter Einsatz eines in einer hinterschnittenen Nut vorliegenden gefüllten Kleberbehältnisses mit einem korrespondierenden Schachtelgewinde einer separaten Elektrode besonders fest verbunden.

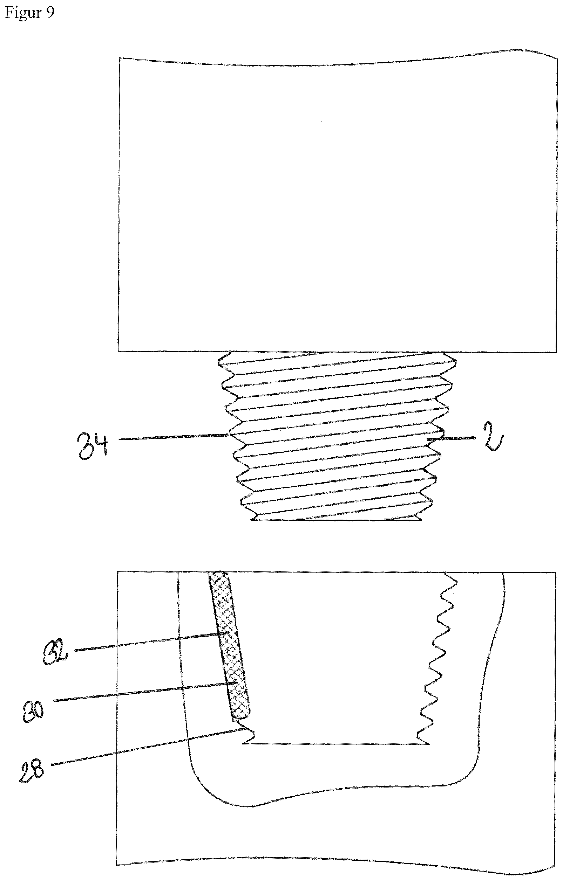

Figur 9 entnimmt man eine schematische Seitenansicht von Nippel- und Schachtelgewindde. Das Schachtelgewinde 28 weist in diesem Fall eine Einlassung 30 in Form einer Nut auf, in der ein gefülltes Kleberbehältnis 32 vorliegt, das in seiner Querschnittsform mit der Querschnittsform der Einlassung 30 korrespondiert und das im vorliegenden Fall nicht nur über die Flankengründe des Gewindes, sondern ebenfalls über die Flankenspitzen hinausragt. Indem das Nippelgewinde 34 in das Schachtelgewinde 28 eingedreht wird, wird das Kleberbehältnis unter Freisetzung und großflächiger Verteilung des Klebers infolge der Drehbewegung zerstört.

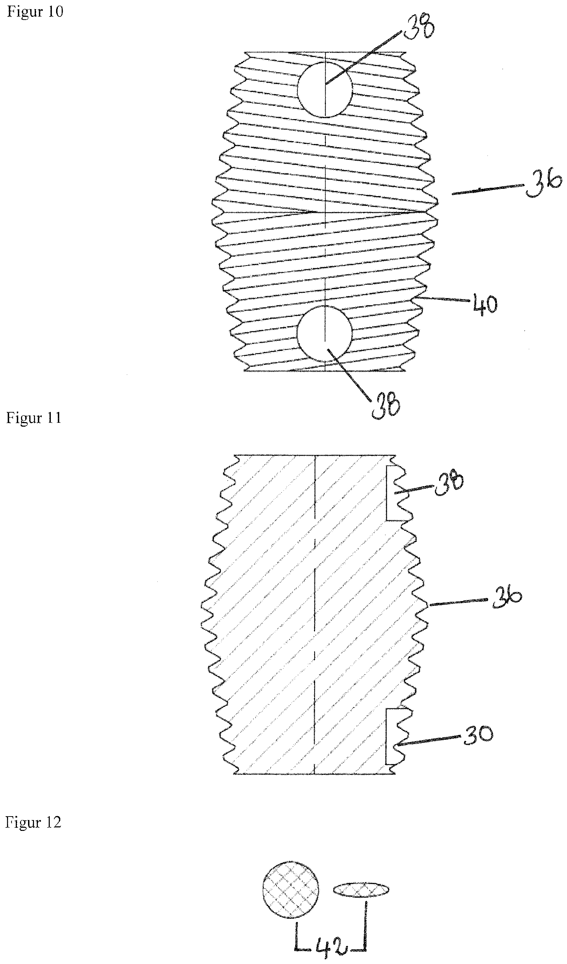

Figur 10 zeigt eine schematische Seitenansicht einer weiteren Ausgestaltung eines Nippels 36. Die Einlassungen 38 liegen in Form kreisrunder Bohrungen in das jeweilige Nippelgewinde 40 vor und sind symmetrisch angeordnet. Selbstverständlich können diese Einlassungen auch unsymmetrisch in den Nippelgewinden des Doppelnippels angeordnet sein. Die Bohrungen bzw. Einlassungen 38 gehen in der gezeigten Ausführungsform über die Tiefe des Profils des Gewindes hinaus, wie der Figur 11 zu entnehmen ist. In diese Einlassungen 38 können Kleberbehältnisse 42, wie in Figur 12 gezeigt, die in Form und Größe auf die Dimension der Einlassungen 38 abgestimmt sind, eingeführt werden. Erneut gehen diese gefüllten Kleberbehältnisse über zumindest des Flankengrund des Nippelgewindes hinaus, wodurch vermittels der Wechselwirkung mit einem (nicht gezeigten) Schachtelgewinde einer Elektrode beim Eindrehen derselben der Kleber freigesetzt und großflächig verteilt wird. Auch bei dieser Art der Einlassungen erhält man eine besonders feste Verbindung eines Nippel/Elektroden-Systems.

### Beispiel

Ein Gewindeschachtelabschnitt wurde in einem Ofen eingebaut und auf 320°C erwärmt. Die Temperatur wurde 24h gehalten, damit der ganze Gewindeschachtelabschnitt die Temperatur erreicht.

Dann wurde der Gewindeschachtelabschnitt ausgebaut und der zuvor mit zwei erfindungsgemäßen Beuteln bestückte Nippel in den Gewindeschachtelabschnitt eingeführt und verschraubt.

Nach dem Abkühlen wurde die Verbindung durchgesägt, um die verschiedenen Positionen sehen zu können, an denen der Beutel aufgeplatzt ist. Dabei konnte festgestellt werden, dass sich der Kleber während des Verschraubens gleichmäßig verteilt.

## Patentansprüche

1. Verfahren zur Herstellung einer gesicherten Elektroden/Nippel-Verbindung, umfassend
- das Eindrehen eines Nippelgewindes (2; 34; 40) eines kohlenstoffhaltigen Nippels (36), wobei der kohlenstoffhaltige Nippel (36) mit mindestens einem Nippelgewinde (2; 34; 40) für kohlenstoffhaltige Elektroden (20; 24) als zylindrischer oder doppelkonischer Doppelgewindenippel (1; 3) ausgebildet ist und mindestens eine Einlassung (30) in dem mindestens einen Nippelgewinde (2; 34; 40), geeignet für die Aufnahme mindestens eines mit einem härtbaren Kleber gefüllten Kleberbehältnisses (32; 42) in sämtlichen Nippelgewinden (2; 34; 40), die das Nippelgewinde (2; 34; 40) quer, im Wesentlichen senkrecht zu diesem Gewinde (2; 34; 40) durchläuft, aufweist,
- oder das Eindrehen eines Nippelgewindes (2; 34; 40) eines Nippel-Kits, wobei das Nippel-Kit mindestens einen kohlenstoffhaltigen Nippel (36) für kohlenstoffhaltige Elektroden (20; 24) umfasst und mindestens eine Einlassung (30) in dem mindestens einen Nippelgewinde (2; 34; 40), sämtlichen Nippelgewinden (2; 34; 40), eine Nut (4), die das Nippelgewinde (2; 34; 40) quer, im Wesentlichen senkrecht zu diesem Gewinde (2; 34; 40), durchläuft,
- und mindestens ein Kleberbehältnis (32; 42), in der Einlassung (30) vorliegt, enthaltend einen flüssigen oder pastösen thermisch und/oder chemisch härtenden Kleber, Klebermischung, wobei das Kleberbehältnis (32; 42) mindestens ein Schwächungsareal, und/oder mindestens eine Schwächungslinie aufweist, sich im Wesentlichen von einem Ende des Kleberbehältnisses zu dem gegenüberliegenden Ende des Kleberbehältnis (32; 42) erstreckend oder auf derselben Seite des Kleberbehältnisses (32; 42) vorliegt
- jeweils unter zumindest partieller Zerstörung des Kleberbehältnisses (32; 42) beim Eindrehen, im Bereich oder entlang mindestens eines Schwächungsareals oder mindestens einer Schwächungslinie, und unter Freisetzung des Klebers;
- Verteilen des freigesetzten Klebers, während des Eindrehens über die von der Einlassung (30; 38), abgedeckte Fläche hinaus zwischen Nippel- (2; 34; 40) und Schachtelgewinde (22; 28); sowie
- Aushärten dieses freigesetzten Klebers.

2. Verfahren nach Anspruch 1, **dadurch gekennzeichnet, dass** das Nippel-Kit mindestens eine Einlassung (30), insbesondere mindestens eine Nut (4) hinterschnitten ist und/oder dass mindestens eine Einlassung (38), insbesondere mindestens eine Nut, nicht hinterschnitten ist.

3. Verfahren nach einem der vorangehenden Ansprüche, **dadurch gekennzeichnet, dass** das in der mindestens einen Einlassung (30; 38) des Nippel-Kits, insbesondere der Nut (4), vorliegende Kleberbehältnis (32; 42) derart dimensioniert ist, dass es über das Nippelgewinde (2; 34; 40) mindestens abschnittsweise hinausragt, wobei insbesondere das bzw. die Schwächungsareale und/oder -linien im Wesentlichen mindestens überwiegend, insbesondere vollständig, in dem Bereich des Kleberbehältnisses (32; 42) vorliegen, der über das Nippelgewinde (2; 34; 40) hinausragt.

4. Verfahren nach Anspruch 1, **dadurch gekennzeichnet, dass** die kohlenstoffhaltige Elektrode (20; 24) mindestens eine Elektrodenschachtel mit einem Schachtelgewinde (22; 28) umfasst, und dass in dem Schachtelgewinde (22; 28) mindestens eine Einlassung (30; 38), insbesondere eine Nut (4), vorliegt, geeignet für die Aufnahme mindestens eines Kleberbehältnisses (32; 42), enthaltend einen flüssigen oder pastösen thermisch und/oder chemisch härtenden Kleber, insbesondere Klebermischung, wobei gegebenenfalls diese Nut (4) das Schachtelgewinde (22; 28) insbesondere quer, vorzugsweise im Wesentlichen senkrecht zu diesem Gewinde (22; 28), durchläuft.

5. Verfahren nach einem der vorangehenden Ansprüche, **dadurch gekennzeichnet, dass** das Kleberbehältnis (32; 42) aus mindestens einer Laminatfolie, enthaltend oder bestehend aus mindestens zwei laminierten Kunststofffolien oder mindestens einer Kunststofffolie und mindestens einer Metallfolie, gefüllt mit einem flüssigen oder pastösen thermisch und/oder chemisch härtenden Kleber gebildet ist oder umfasst.

6. Verfahren nach einem der vorangehenden Ansprüche, **dadurch gekennzeichnet, dass** das Kleberbehältnis (32; 42) einen Einkammerbeutel (8) oder einen Mehrkammerbeutel (18) darstellt.

7. Verfahren nach Anspruch 6, **dadurch gekennzeichnet, dass** das Kleberbehältnis (32; 42) mindestens ein Schwächungsareal, insbesondere ein perforiertes Areal, und/oder mindestens eine Schwächungslinie, insbesondere eine Perforationslinie, aufweist das bzw. die sich insbesondere im Wesentlichen von einem Ende des Beutels (8) zu dem gegenüberliegenden Ende des Beutels (8) erstreckt und/oder auf derselben Seite des Beutels (8) vorliegt.

8. Verfahren nach einem der vorangehenden Ansprüche, **dadurch gekennzeichnet, dass** das mindestens eine Schwächungsareal, insbesondere ein perforiertes Areal, und/oder die mindestens eine Schwächungslinie, insbesondere eine Perforationslinie, sich im Wesentlichen von einem Ende des Kleberbehältnisses (32; 42) zu dem gegenüberliegenden Ende des Kleberbehältnis (32; 42) erstreckt und/oder auf derselben Seite des Kleberbehältnisses (32; 42) vorliegt.

9. Verfahren nach Anspruch 1, **dadurch gekennzeichnet, dass** die Einlassung (30; 38), insbesondere die Nut (4), mindestens abschnittsweise, insbesondere im Wesentlichen vollständig, hinterschnitten ist.

10. Verfahren nach einem der vorangehenden Ansprüche, dass der Kleber bzw. die Klebermischung a) mindestens eine Harzbasis und/oder b) mindestens eine Pechbasis sowie c) mindestens einen Füllstoff, insbesondere enthaltend Graphit- und/oder Rußpartikel, vorzugsweise mit einer durchschnittlichen Partikelgröße kleiner oder gleich 0,5 mm, sowie d) gegebenenfalls mindestens einen Härter, insbesondere Latenthärter, enthält oder hieraus besteht.

11. Verfahren nach einem der vorangehenden Ansprüche, dass die Klebermischung in Form eines Klebermischung-Kits vorliegt, in dem der Härter eine separate Komponente darstellt.

## Claims

1. Method for the production of a secured electrode/nipple connection, comprising
- the screwing-in of a nipple thread (2; 34; 40) of a nipple (36) with carbon content, wherein
the nipple (36) with carbon content is designed, with at least one nipple thread (2; 34; 40) for electrodes (20; 24) with carbon content, as a cylindrical or double-conical double-threaded nipple (1; 3), and has at least one recess (30) in the at least one nipple thread (2; 34; 40), suitable for the accommodation of at least one adhesive container (32; 42) filled with a curable adhesive, in all nipple threads (2; 34; 40), which passes transversely through the nipple thread (2; 34; 40), essentially at right angles to the said thread (2; 34; 40),
- or the screwing-in of a nipple thread (2; 34; 40) of a nipple kit, wherein
the nipple kit comprises at least one nipple (36) with carbon content for electrodes (20; 24) with carbon content, and at least one recess (30) in the at least one nipple thread (2; 34; 40), all nipple threads (2; 34; 40), a groove (4), which passes transversely through the nipple thread (2; 34; 40), essentially at right angles to the said thread (2; 34; 40),
- and at least one adhesive container (32; 42) is present in the recess (30), comprising a liquid-form or paste-form, thermally and/or chemically curing, adhesive, or adhesive mix, wherein
the adhesive container (32; 42) has at least one area of weakness, and/or at least one line of weakness, extending essentially from one end of the adhesive container to the opposite end of the adhesive container (32; 42), or present on the same side of the adhesive container (32; 42)
- in each case with at least partial destruction of the adhesive container (32; 42) during the screwing-in procedure, in the region or along at least one area of weakness, or along at least one line of weakness, and with release of the adhesive;
- distribution of the released adhesive, during the screwing-in procedure, over the surface covered by the recess (30; 38), between the nipple thread (2; 34; 40) and the casing thread (22; 28); and
- curing of the said released adhesive.

2. Method according to Claim 1,
**characterised in that**
in the nipple kit at least one recess (30), in particular at least one groove (4) is undercut, and/or **in that** at least one recess (38), in particular at least one groove, is not undercut.

3. Method according to one of the preceding claims,
**characterised in that**
the adhesive container (32; 42) present in the at least one recess (30; 38) of the nipple kit, in particular the groove (4), is dimensioned such that it projects beyond the nipple thread (2; 34; 40), at least in some sections, wherein
in particular the areas and/or lines of weakness are essentially present at least predominantly, in particular completely, in the region of the adhesive container (32; 42), which projects beyond the nipple thread (2; 34; 40).

4. Method according to Claim 1,
**characterised in that**
the electrode (20; 24) with carbon content comprises at least one electrode casing with a casing thread (22; 28), and **in that** in the casing thread (22; 28) there is at least one recess (30; 38), in particular a groove (4), suitable for the accommodation of at least one adhesive container (32; 42) containing a liquid-form or paste-form, thermally and/or chemically curing, adhesive, in particular an adhesive mix, wherein
where appropriate, the said groove (4) passes transversely through the casing thread (22; 28), in particular, preferably essentially at right angles to the said thread (22; 28).

5. Method according to one of the preceding claims,
**characterised in that**
the adhesive container (32; 42) is formed from, or comprises, at least one laminate film, containing, or consisting of, at least two laminated plastic films, or at least one plastic film and at least one metal film, filled with a liquid-form or paste-form, thermally and/or chemically hardening, adhesive.

6. Method according to one of the preceding claims,
**characterised in that**
the adhesive container (32; 42) is a single-chamber sachet (8) or a multi-chamber sachet (18).

7. Method according to Claim 6,
**characterised in that**
the adhesive container (32; 42) has at least one area of weakness, in particular a perforated area, and/or at least one line of weakness, in particular a perforation line, which in particular extends essentially from one end of the sachet (8) to the opposite end of the sachet (8), and/or is present on the same side of the sachet (8).

8. Method according to one of the preceding claims,
**characterised in that**
the at least one area of weakness, in particular a perforated area, and/or the at least one line of weakness, in particular a perforation line, extends essentially from one end of the adhesive container (32; 42) to the opposite end of the adhesive container (32; 42), and/or is present on the same side of the adhesive container (32; 42).

9. Method according to Claim 1,
**characterised in that**
the recess (30; 38), in particular the groove (4), is undercut, at least in some sections, in particular essentially completely.

10. Method according to one of the preceding claims,
in which the adhesive or the adhesive mix contains or consists of a): at least one resin base, and/or b): at least one pitch base, together with c): at least one filler, in particular containing graphite particles and/or soot particles, preferably with an average particle size of less than or equal to 0.5 mm, together with, where appropriate, d): at least one curing agent, in particular a latent curing agent.

11. Method according to one of the preceding claims,
in which the adhesive mix is present in the form of an adhesive mix kit, in which the curing agent represents a separate component.

## Revendications

1. Procédé, destiné à fabriquer un assemblage sécurisé électrode/mamelon de liaison, comprenant
- le vissage d'un filetage de mamelon (2 ; 34 ; 40) d'un mamelon de liaison (36) carboné, le mamelon de liaison (36) carboné étant réalisé avec au moins un filetage de mamelon (2 ; 34 ; 40) destiné à des électrodes (20 ; 24) carbonées sous la forme d'un mamelon de liaison à double filetage (1 ; 3) cylindrique ou double-conique et comportant au moins un creux (30) dans l'au moins un filetage de mamelon (2 ; 34 ; 40), apte à recevoir au moins un contenant d'adhésif (32 ; 42) rempli d'un agent adhésif durcissable dans l'ensemble des filetages de mamelon (2 ; 34 ; 40), qui traverse le filetage de mamelon (2 ; 34 ; 40) à la transversale, sensiblement à la perpendiculaire dudit filetage (2 ; 34 ; 40),
- ou le vissage d'un filetage de mamelon (2 ; 34 ; 40) d'un kit de mamelons de liaison, le kit de mamelons de liaison comprenant au moins un mamelon de liaison (36) destiné à des électrodes (20 ; 24) carbonées et au moins un creux (30) dans l'au moins un filetage de mamelon (2 ; 34 ; 40), dans l'ensemble des filetages de mamelon (2 ; 34 ; 40), une rainure (4), qui traverse le filetage de mamelon (2 ; 34 ; 40) à la transversale, sensiblement à la perpendiculaire dudit filetage (2 ; 34 ; 40),
- et au moins un contenant d'adhésif (32 ; 42), contenant un agent adhésif, un mélange d'agents adhésifs pâteux ou liquide, thermodurcissable et/ou chimiodurcissable étant présent dans le creux (30), le contenant d'adhésif (32 ; 42) comportant au moins une région d'affaiblissement, et/ou au moins une ligne d'affaiblissement s'étendant sensiblement d'une extrémité du contenant d'adhésif vers l'extrémité opposée du contenant d'adhésif (32 ; 42) ou étant présente sur le même côté du contenant d'adhésif (32 ; 42),
- en détruisant au moins partiellement le contenant d'adhésif (32 ; 42) lors du vissage, dans la zone ou le long d'au moins une région d'affaiblissement ou d'au moins une ligne d'affaiblissement, et en libérant l'agent adhésif ;
- la distribution de l'agent adhésif libéré pendant le vissage sur la surface recouverte par le creux (30 ; 38), vers l'extérieur, entre le filetage de mamelon (2 ; 34 ; 40) et le filetage de boîtier (22 ; 28) ; et
- le durcissement dudit agent adhésif.

2. Procédé selon la revendication 1, **caractérisé en ce que** dans le kit de mamelons de liaison, au moins un creux (30), notamment au moins une rainure (4) est contredépouillé(e) et/ou **en ce qu'**au moins un creux (38), notamment au moins une rainure n'est pas contredépouillé(e) .

3. Procédé selon l'une quelconque des revendications précédentes, **caractérisé en ce que** le contenant d'adhésif (32 ; 42) présent dans l'au moins un creux (30 ; 38) du kit de mamelons de liaison, notamment dans la rainure (4), est dimensionné de sorte à saillir au moins par endroits au-delà du filetage de mamelon (2 ; 34 ; 40), notamment la ou les régions et/ou lignes d'affaiblissement étant présentes sensiblement au moins majoritairement, notamment totalement dans la zone du contenant d'adhésif (32 ; 42) qui saillit au-delà du filetage de mamelon (2 ; 34 ; 40).

4. Procédé selon la revendication 1, **caractérisé en ce que** l'électrode (20 ; 24) carbonée comprend au moins un boîtier d'électrode pourvu d'un filetage de boîtier (22 ; 28) et **en ce que** dans le filetage de boîtier (22 ; 28) est présent au moins un creux (30 ; 38), notamment une rainure (4), apte à recevoir au moins un contenant d'adhésif (32 ; 42) qui contient un agent adhésif, notamment un mélange d'agents adhésifs pâteux ou liquide, thermodurcissable et/ou chimiodurcissable, le cas échéant, ladite rainure (4) traversant le filetage de boîtier (22 ; 28) notamment à la transversale, de préférence sensiblement à la perpendiculaire dudit filetage (22 ; 28).

5. Procédé selon l'une quelconque des revendications précédentes, **caractérisé en ce que** le contenant d'adhésif (32 ; 42) est conçu en ou comprend au moins un film laminé, contenant au moins deux films de matière plastique laminée ou constitué de ces derniers ou au moins un film de matière plastique et au moins un film métallique, rempli d'un agent adhésif pâteux ou liquide, thermodurcissable et/ou chimiodurcissable.

6. Procédé selon l'une quelconque des revendications précédentes, **caractérisé en ce que** le contenant d'adhésif (32 ; 42) est une poche mono-compartiment (8) ou une poche multi-compartiments (18).

7. Procédé selon la revendication 6, **caractérisé en ce que** le contenant d'adhésif (32 ; 42) comporte au moins une région d'affaiblissement, notamment une région perforée, et/ou au moins une ligne d'affaiblissement, notamment une ligne perforée, qui s'étend notamment sensiblement d'une extrémité de la poche (8) vers l'extrémité opposée de la poche (8) et/ou qui est présente sur le même côté de la poche (8).

8. Procédé selon l'une quelconque des revendications précédentes, **caractérisé en ce que** l'au moins une région d'affaiblissement, notamment une région perforée et/ou l'au moins une ligne d'affaiblissement, notamment une ligne perforée s'étend sensiblement d'une extrémité du contenant d'adhésif (32 ; 42) vers l'extrémité opposée du contenant d'adhésif (32 ; 42) et/ou est présente sur le même côté du contenant d'adhésif (32 ; 42).

9. Procédé selon la revendication 1, **caractérisé en ce que** le creux (30 ; 38), notamment la rainure (4) est contredépouillé(e) au moins par endroits, notamment sensiblement en totalité.

10. Procédé selon l'une quelconque des revendications précédentes, **caractérisé en ce que** l'agent adhésif ou le mélange d'agents adhésifs a) contient au moins une fibre résineuse et/ou b) au moins une fibre de carbone et c) au moins un agent de charge, contenant notamment des particules de graphite et/ou de fibres de carbone, de préférence d'une taille moyenne de particules inférieure ou égale à 0,5 mm, et d) le cas échéant, au moins un agent durcisseur, notamment un agent durcisseur latent, ou est constitué de ces derniers.

11. Procédé selon l'une quelconque des revendications précédentes, **caractérisé en ce que** le mélange d'agents adhésifs se présente sous la forme d'un kit de mélange d'agents adhésifs, dans lequel l'agent durcisseur est un composant séparé.
